# EUROPEAN PATENT SPECIFICATION

(11) **EP 0 684 334 B1**
(45) Date of publication and mention of the grant of the patent: **15.12.1999**
(21) Application number: 95202298.6
(22) Date of filing: 16.11.1994
(51) Int. Cl.: H02P 5/402, D06F 33/02

(54) **Method and device for controlling speed of a washing machine motor**
Verfahren und Vorrichtung zum Regeln der Drehzahl eines Waschmaschinenmotors
Procédé et dispositif pour commander la vitesse du moteur d'une machine à laver

(30) Priority: 16.11.1993 KR 9324065; 20.01.1994 KR 9401068; 29.03.1994 KR 9406365; 16.05.1994 KR 9410678; 17.05.1994 KR 9410853
(43) Date of publication of application: 29.11.1995
(62) Divisional of application: 94308465.7
(73) Proprietor: LG ELECTRONICS INC., Seoul (KR)
(72) Inventor: Cheong, Dal Ho, Mapo-ku, Seoul (KR); Sang, Doo Whan, Seoul (KR)
(74) Representative: McLeish, Nicholas Alistair Maxwell

(56) References cited:
- EP-A- 0 653 832
- JP-A- 61 146 297
- JP-A- 62 142 586
- US-A- 4 553 413

## Description

### FIELD OF THE INVENTION

This invention relates to methods and devices for controlling speed of a washing machine motor, more particularly to methods and devices for controlling speed of a washing machine motor by varying number of revolutions and changing direction of rotation of the motor through controlling phase of the motor.

### BACKGROUND OF THE INVENTION

A conventional device for controlling speed of a washing machine motor is to be explained hereinafter, referring to a Low Noise Type(G-Series) motor taken from Matsushita catalogue.

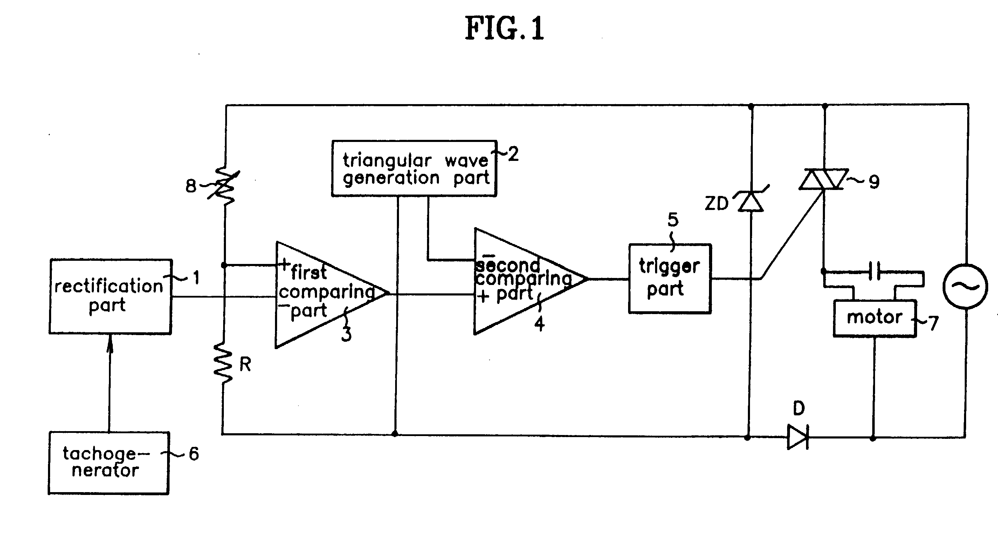

As shown in FIG.1, a conventional device for controlling speed of a washing machine motor includes a tachogenerator 6 for detecting number of revolutions of a washing machine motor 7, a rectification circuit part 1 for converting signals received from the tachogenerator 7 into direct current by rectifying and smoothing the signals, a variable resistor 8 for setting speed of rotation, a first comparing part 3 for comparing signals from the rectification circuit part 1 with signals varied by the variable resistor 8, a triangular wave generation part 2 for generating triangular pulse signals, a second comparing part 4 for comparing the triangular pulse signals received from the triangular wave generation part 2 with the signals received from the first comparing part 3, a trigger part 5 for triggering the signals received from the second comparing part 4 to control operation of the washing machine motor 7, and a triac 9 for turning on/off a driving power to the washing machine motor in response to the control signal of the trigger part 5.

Operation of the foregoing conventional device for controlling speed of a washing machine motor is to be explained hereinafter.

The tachosignal generated at the tachogenerator 6 in sine wave voltage proportional to the number of revolutions of the washing machine motor 7 is applied to the rectification circuit part 1, and rectified into direct current voltage therein. The direct current voltage from the rectification circuit part 1 is applied to the first comparing part 3 to compare with a voltage generated by the variable resistor 8 used for setting speed of rotation, and then applied to the second comparing part 2 to compare with the triangular pulse generated at the triangular wave generation part 2. The signal applied from the second comparing part 4 to the triac 9 through the trigger part 5 triggering a gate of the triac 9 controls phase of an alternative current varying input power to the washing machine motor 7, thereby controls speed of the washing machine motor 7.

However, the conventional device for controlling the speed of a washing machine motor has had problems of complicate and unstable control because, for reversing the motor 7, the motor 7 should be stopped to change over a switch provided outside of the motor 7 for changing winding of the motor 7 due to no built in means for reversing the motor 7 has been provided, and the motor 7 has exhibited great variation in number of revolutions due to low preciseness of the sine wave signal coming from conversion of the sine wave signal applied from the tachogenerator 6 to the rectification part 1 for detecting number of revolutions of the motor 7 into direct current voltage therein.

US-4,553,413 discloses a washing machine adapted to detect the washing load size in order to control various factors in the washing process such as the washing bath ratio, the amount of the detergent and the number of revolutions of the fabric articles being worked.

### SUMMARY OF THE INVENTION

The object of this invention is to provide devices for controlling speed of a washing machine motor which enables to control water current of a washing machine at will by controlling the direction of rotation and number of revolutions of the washing machine motor through controlling the phase of the input voltage applied to the washing machine motor.

These and other objects and features of this invention can be achieved by providing a device for controlling speed of a washing machine motor including a current detection means for detecting current flowing through a washing machine motor, a microcomputer for determining quantity of laundry according to a speed-torque characteristic curve based on current received from the current detection means, and determining driving speed of the washing machine motor and controlling operation of the washing machine motor based on the determined quantity of laundry, and a switching means for controlling operation of the washing machine motor under the control of the microcomputer.

Advantageously the microcomputer stores data on amount of load and driving speed of the washing machine motor generated in the microcomputer.

Advantageously the switching means includes a first and a second triacs for controlling operation of the washing machine motor by turning on/off in response to the signal received from the microcomputer.

Advantageously the current detection means includes a transformer connected to an alternative current input terminal of the washing machine motor for sensing intensity cf current flowing through the washing machine motor.

### BRIEF DESCRIPTION OF THE DRAWINGS

FIG. 1 is a conventional device for controlling speed of a washing machine motor.

FIG. 2 is a device for controlling speed of a washing machine motor in accordance with an embodiment of this invention.

FIG. 3 is a detail circuit diagram of FIG. 16.

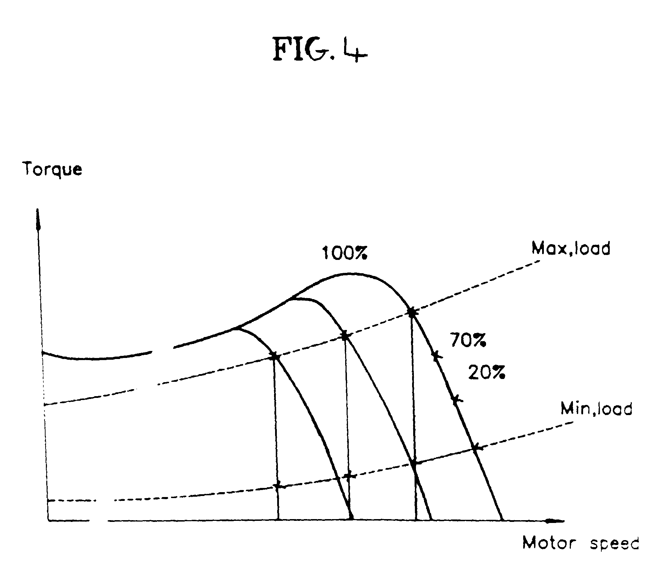

FIG. 4 shows a speed-torque characteristic of the washing machine motor in accordance with FIG. 16.

### DETAILED DESCRIPTION OF THE INVENTION

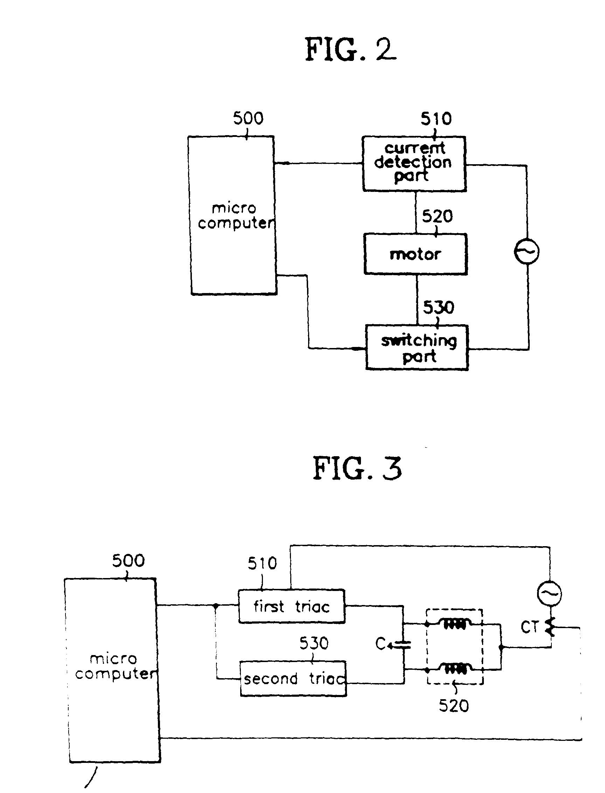

As shown in FIGs. 2 and 3, a device for controlling speed of a washing machine motor in accordance with an embodiment of this invention includes a microcomputer 500, a current detection part 510, and a switching part 530, thereby, through determining amount of load based on a speed-torque characteristic curve of the washing machine motor at sensing the laundry quantity and estimating speed of the washing machine motor by referring to a data on driving speed of the washing machine motor generated in the microcomputer, the speed of the washing machine motor can be controlled conveniently.

The current detection part 510 having a transformer CT connected to an alternative current input terminal of the washing machine motor 520 for sensing intensity of current flowing into the washing machine motor 520 detects intensity of current flowing through the washing machine motor 520.

The microcomputer 500 that determines the driving speed of the washing machine motor 520 by detecting laundry quantity from a speed-torque characteristic curve of the washing machine motor 520 based on the intensity of current received from the current detection part 510 and controls operation of the washing machine motor 520, stores data on amount of load and driving speed of the washing machine motor 520 generated in the microcomputer 500.

As shown in FIG.17, the switching part 530 having a first and a second triacs 531 and 532 for controlling operation of the washing machine motor by turning on/off in response to the signal received from the microcomputer 500 controls operation of the washing machine motor 520 under the control of the microcomputer 500.

Operation of the device for controlling speed of the washing machine motor having the foregoing comprisal in accordance with this invention is to be explained hereinafter, referring to FIG.18.

First, since the maximum capacity of a washing machine will be fixed at least by the time of shipment, if intensity of current has been calculated based on amount of load at the maximum capacity as well as various working condition, the present speed of the washing machine motor can be detected.

In other words, at the time of shipment of the products, if speed-torque curves of a motor based on various loads have been prepared, connecting the outermost contours for various loads, these outermost contours represent the very curves when the maximum voltage is applied to washing machine motor 520, and accordingly, since load curves of 10% to 100% of the load of a washing machine can be obtained from the speed-torque characteristic curves, current intensities corresponding to these loads can be obtained. Therefore, by sensing loads at initial operation of the washing machine and based on the load curve about the loads, a phase angle, i.e., a speed of the washing machine motor can be determined.

That is, if a load based on a laundry quantity is 10% of the maximum load, by comparing a required intensity of current at the present speed taken along the 10% load curve of the speed-torque characteristic curve with the present intensity of current applied from the current sensing part 510, it is possible to determine the present required speed of the washing machine motor 520 to control the speed of the washing machine motor 520.

In other words, by sensing laundry quantity using the microcomputer 500 and detecting a load about the sensed laundry quantity, speed of the washing machine motor 520 can be determined.

And in the foregoing process, when the speed of the washing machine motor 520 is determined, the transformer CT in the current detection part 510 can detect the intensity of current flowing through the washing machine motor 520 which current intensity is applied to the microcomputer 500 at an A/D conversion input terminal thereon to determine the present speed of the washing machine motor 520 through compensation for error with proportional integration control and comparison with data already stored therein.

That is, since speed of the washing machine motor 520 can be controlled without any separate additional device for detecting speed of the washing machine motor 520 by comparing the speed of the washing machine motor 520 determined based on laundry quantity with the speed of the washing machine motor 520 at the present time and controlling the first and the second triacs 531 and 532 in the switching part 530 based on the comparison of the speeds.

As has been explained, this invention has advantages of facilitating convenient control of water current of a washing machine by controlling the number of revolutions of a washing machine motor through controlling the phase of input voltage applied to the washing machine motor, and improving quality and reliability of motors used in home electric appliances through precise speed control of the motors by applying this invention to refrigerators and air conditioners as well.

## Claims

1. A device for controlling speed of a washing machine motor comprising:
a current detection means (510) for detecting current flowing through a washing machine motor (520);
a microcomputer (500) for determining the quantity of laundry on the basis of the current measured by the current detection means (510), and determining the driving speed of the washing machine motor (520) according to the speed-torque characteristic curve and the torque load determined in accordance with the measured current, and controlling operation of the washing machine motor (520) on the basis of the determined quantity of laundry and the determined driving speed, and
a switching means (530) for controlling operation of the washing machine motor (520) under the control of the microcomputer (500).

2. The device as claimed in claim 1, wherein the microcomputer (500) stores data on amount of load and driving speed of the washing machine motor (520) generated in the microcomputer (500).

3. The device as claimed in claim 1, wherein the switching means (530) includes a first and a second triacs (531, 532) for controlling operation of the washing machine motor (520) by turning on/off in response to the signal received from the microcomputer (500).

4. The device as claimed in claim 1, wherein the current detection means (510) includes a transformer (CT) connected to an alternative current input terminal of the washing machine motor (520) for sensing intensity of current flowing through the washing machine motor (520).

## Patentansprüche

1. Einrichtung zur Drehzahlsteuerung eines Waschmaschinenmotors, umfassend:
- Stromerfassungsmittel (510) zur Erfassung eines durch einen Waschmaschinenmotor (520) fließenden Stroms,
- einen Mikrocomputer (500) zur Bestimmung der Wäschemenge auf Grundlage des von den Stromerfassungsmitteln (510) gemessenen Stroms und zur Bestimmung der Antriebsgeschwindigkeit des Waschmaschinenmotors (520) nach Maßgabe der Drehzahl-Drehmoment-Kennlinie und der nach Maßgabe des gemessenen Stroms bestimmten Drehmomentbelastung und zur Steuerung des Betriebs des Waschmaschinenmotors (520) auf Grundlage der bestimmten Wäschemenge und der bestimmten Antriebsgeschwindigkeit und
- Schaltmittel (530) zur Steuerung des Betriebs des Waschmaschinenmotors (520) unter der Steuerung des Mikrocomputers (500).

2. Einrichtung nach Anspruch 1, bei der der Mikrocomputer (500) in dem Mikrocomputer (500) erzeugte Daten über die Belastüngshöhe und die Antriebsgeschwindigkeit des Waschmaschinenmotors (520) speichert.

3. Einrichtung nach Anspruch 1, bei der die Schaltmittel (530) ein erstes und ein zweites Triac (531, 532) zur Steuerung des Betriebs des Waschmaschinenmotors (520) durch Ein/Ausschalten in Antwort auf das vom Mikrocomputer (500) erhaltene Signal umfassen.

4. Einrichtung nach Anspruch 1, bei der die Stromerfassungsmittel (510) einen Transformator (CT) umfassen, welcher zur Erfassung der Stärke des durch den Waschmaschinenmotor (520) fließenden Stroms an einen Wechselstromeingangsanschluß des Waschmaschinenmotors (520) angeschlossen ist.

## Revendications

1. Dispositif pour commander la vitesse d'un moteur de lave-linge, comportant :
des moyens de détection de courant (510) pour détecter un courant circulant à travers un moteur de lave-linge (520),
un micro-ordinateur (500) pour déterminer la quantité de lessive sur la base du courant mesuré par les moyens de détection de courant (510), et déterminer la vitesse d'entraînement du moteur de lave-linge (520) conformément à la courbe de la caractéristique vitesse-couple et à la charge de couple déterminée conformément au courant mesuré, et commander le fonctionnement du moteur de lave-linge (520) sur la base de la quantité déterminée de lessive et de la vitesse d'entraînement déterminée, et
des moyens de commutation (530) pour commander le fonctionnement du moteur de lave-linge (520) sous la commande du micro-ordinateur (500).

2. Dispositif selon la revendication 1, dans lequel le micro-ordinateur (500) mémorise des données concernant la quantité de charge et la vitesse d'entraînement du moteur de lave-linge (520) produite dans le micro-ordinateur (500).

3. Dispositif selon la revendication 1, dans lequel les moyens de commutation (530) comportent un premier et un second triacs (531, 532) pour commander le fonctionnement du moteur de lave-linge (520) par allumage/coupure en réponse au signal reçu depuis le micro-ordinateur (500).

4. Dispositif selon la revendication 1, dans lequel les moyens de détection de courant (510) comportent un transformateur (CT) connecté à une borne d'entrée de courant alternatif du moteur de lave-linge (520) pour détecter l'intensité de courant circulant à travers le moteur de lave-linge (520).
